# EUROPÄISCHE PATENTSCHRIFT

(11) **EP 0 899 186 B1**
(45) Veröffentlichungstag und Bekanntmachung des Hinweises auf die Patenterteilung: **17.09.2003**
(21) Anmeldenummer: 98112619.6
(22) Anmeldetag: 08.07.1998
(51) Int. Cl.: B62K 25/08

(54) **Federnde, lenkbare Achsaufhängung für ein Zweirad**
Steerable axle suspension systems for a two wheel vehicle
Suspension élastique d'essieu pour véhicules à deux roues

(30) Priorität: 28.08.1997 DE 19737599
(43) Veröffentlichungstag der Anmeldung: 03.03.1999
(73) Patentinhaber: Bayerische Motoren Werke Aktiengesellschaft, 80788 München (DE)
(72) Erfinder: Theobald, Markus, 80995 München (DE)

(56) Entgegenhaltungen:
- WO-A-96/03307
- DE-C- 817 252
- DE-C- 899 444
- DE-U- 6 606 862
- US-A- 5 209 319

## Beschreibung

Die Erfindung betrifft eine federnde, lenkbare Achsaufhängung für ein Zweirad gemäß dem Oberbegriff des Patentanspruches 1.

Eine derartige Achsaufhängung ist aus der WO-A-9603307 bekannt.

Es ist bereits bekannt, ein Vorderrad eines Zweirades in einer Vorderradgabel zu führen, die wiederum über einen, um eine Fahrzeugquerachse schwenkbar, fahrzeugrahmenfest angebrachten Längslenker, teleskopisch einfederbar, lenkbar mit dem Fahrzeugrahmen verbunden ist. Das deutsche Gebrauchsmuster G 94 07 208 U1 beschreibt eine solche Achsaufhängung, bei der die beiden Gabelholme der Vorderradgabel zusätzlich, in Längsrichtung verschiebbar, in einer oberen Gabelbrücke geführt sind. Bei einer solchen Bauweise sind die Gabelhome der Vorderradgabel sehr lang ausgeführt und deshalb nicht einfach und nicht preiswert herzustellen.

Insbesondere dann, wenn die Gabelholme der Vorderradgabel als Gleitrohre ausgebildet sind, die über Standrohre teleskopisch verschiebbar geführt werden, sind für genügend große Federwege die Bohrungen in den Gleitrohren sehr tief auszuführen. Desweiteren sind, um gutes Ansprechverhalten der Federung zu erhalten, die Gleitflächen zwischen Standrohr und Gleitrohr mit großem Aufwand, sehr sorgfältig zu bearbeiten.

Außerdem ist eine sehr robuste und schwere Ausbildung der Vorderradgabel erforderlich, soll sie im Falle ihrer Deformation, durch Verformung zum Abbau der kinetischen Energie des Fahrzeugs beitragen. Werden die Gabelholme der Vorderradgabel dafür aber sehr stark dimensioniert und sind deshalb schwer, führt dies zu einer unerwünschten Vergrößerung der Trägheitsmomente um die Lenkachse, sowie zu einer Vergrößerung der ungefederten Massen, was die Fahrdynamik des Fahrzeugs beeinträchtigt.

Aufgabe der Erfindung ist es, eine gattungsgemäße Achsaufhängung für ein Zweirad bereitzustellen, die preiswert und einfach herzustellen ist.

Die Aufgabe wird erfindungsgemäß mit dem kennzeichnenden Merkmalen des Anspruchs 1 gelöst. Weitere Ausgestaltungen der Erfindung ergeben sich aus den Unteransprüchen.

Nach der Erfindung ist das Gleitrohr aus einer Achsaufnahme, zur Aufnahme einer Radachse, und aus einem Rohr gebaut, wobei das Rohr fest mit der Achsaufnahme verbunden ist und diese verlängert.

Ist eine federnde, lenkbare Achsaufhängung für ein Zweirad, aus mindestens einem Gleitrohr und mindestens einem Längslenker, der um eine Fahrzeugquerachse schwenkbar, fahrzeugrahmenfest angebracht ist, wobei Gleitrohr und Längslenker über ein Gelenk miteinander verbunden sind, aus mehreren Teilen gebaut, hat das den Vorteil, daß deren Bearbeitung einfacher und preiswerter ist und daß die Werkstoffe für jedes Teil beanspruchungsgerecht ausgewählt werden können. Außerdem können die einzelnen Teile des gebauten Gleitrohrs so dimensioniert werden, daß die Festigkeit des Gleitrohrs an den erforderlichen Stellen durch ihr Zusammenwirken erhöht wird. Ein solches beanspruchungsgerechtes Zusammenwirken der einzelnen Teile trifft auch auf das Verformungsverhalten des Gleitrohrs zum Abbau kinetischer Energie zu.

Bei einer bevorzugten Ausführung der Erfindung ragt das Rohr in die Achsaufnahme hinein, insbesondere unter Bildung einer Preßpassung, einer Klebeverbindung und/oder einer Verschraubung, wobei der auf die Längsachse des Gleitrohrs projezierte Abstand zwischen dem Gelenk und der Radachse größer ist, als der Abstand zwischen dem achsaufnahmeseitigen Ende des Rohrs und der Radachse.

Das hat den Vorteil, daß die Achsaufnahme im Verhältnis zum Rohr kurz ist und durch die Länge der Achsaufnahme und die Länge der Überlappung von Achsaufnahme und Rohr, das Verformungsverhalten des Gleitrohrs bestimmt werden kann.

Bei einer weiteren bevorzugten Ausführung der Erfindung ist die Wandstärke des Rohrs außerhalb der Achsaufnahme an mindestens einer Stelle über mindestens einen Teil seines Umfangs, insbesondere durch eine Kerbe oder eine Nut, geschwächt. Dies dient vorteilhafterweise zur Festlegung eines günstigen Verformungsbereichs für die Vorderradgabel, bei dem zum Beispiel ein großer Abbau von kinetischer Energie gewährleistet ist. Dies ist bedingt durch das Zusammenwirken mit anderen Bauteilen bei der Verformung.

Sehr vorteilhaft ist, wenn die Wandstärke des Rohrs in der Nähe der Verbindung von Längslenker und Gleitrohr geschwächt ist. An diesem Gelenk tritt bei einer Belastung in Längsrichtung des Fahrzeugs das höchste Biegemoment auf. An dieser Stelle kann also durch Schwächung der Wandstärke, zum Beispiel durch Kerbwirkung, ein weiches Ansprechverhalten bei Deformation zum Abbau kinetischer Energie erreicht werden.

Insbesondere wenn zwei gebaute Gleitrohre die Radachse aufnehmen und über mindestens eine Gabelbrücke verbunden sind, an der der Längslenker angebracht ist, kann das Verformungsverhalten der Gabelbrücke und des Längslenkers sehr vorteilhaft mit zum Abbau von kinetischer Energie durch Verformung verwendet werden.

Ein einfacher stabiler Aufbau wird erreicht, wenn die Gabelbrücke die Achsaufnahmen verbindet Dadurch wird das Rohr im Bereich des größten Biegemoments durch die Achsaufnahme und die Gabelbrücke verstärkt.

Besonders einfach kann dies geschehen, wenn die Gabelbrücke von oben auf die Achsaufnahmen aufgelegt und an diesen befestigt ist. Dazu müssen die Achsaufnahmen nur oben bearbeitet werden, was eine sehr preiswerte Herstellung der Gleitrohre ermöglicht.

Bei einer vorteilhaften Ausführung der Erfindung verbindet die Gabelbrücke die Rohre der gebauten Gleitrohre. In diesem Fall kann die Achsaufnahme sehr kurz gehalten werden, unabhängig vom Raddurchmesser. Die Rohre können so, durch die Gabelbrücke hindurch, fast bis zur Radachse reichen, was eine preiswerte Gestaltung der Achsaufnahme ermöglicht.

Insbesondere bei einer Befestigung der Gabelbrücke an den Achsaufnahmen kann diese sehr preiswert und beanspruchungsgerecht aus ebenen Stahlblech oder aus einem Stahlprofil bestehen. Die Verwendung von Stahl für die Gabelbrücke hat den Vorteil, daß sie durch Verformung besonders viel kinetische Energie abbauen kann. Ist die Gabelbrücke U-förmig ausgebildet und jeweils ein Schenkel der U-förmigen Gabelbrücke an jeweils einem Gleitrohr befestigt, wird eine besonders beanspruchungsgerechte Verformung der Gabelbrücke sichergestellt.

Bei einer weiteren vorteilhaften Ausführung der Erfindung wird das Gleitrohr auf einem Standrohr teleskopisch verschiebbar geführt, und das Standrohr erstreckt sich, in Richtung der Achsaufnahme, mindestens bis über die Verbindung des Längslenkers mit dem Gleitrohr hinaus. Erstreckt sich das Standrohr im Gleitrohr in Richtung der Achsaufnahme gesehen bis über das Gelenk hinaus, so verformen sich beim Abbau kinetischer Energie Gleitrohr und Standrohr zusammen. Dies ermöglicht einen besonders großen Abbau von Energie, da sowohl Standrohr als auch Gleitrohr Verformungsenergie aufnehmen.

Wird die Achsaufnahme in einer weiteren vorteilhaften Ausführung der Erfindung als Metallschmiedeteil, Metallgußteil oder Leichtmetallgußteil ausgebildet, so ist auch bei komplizierter Formgebung eine preiswerte und beanspruchungsgerechte Herstellung möglich.

Dabei ist es für den Energieabbau durch Verformung besonders vorteilhaft, wenn das Rohr des Gleitrohrs aus Stahl oder aus einem Leichtmetall-Strangpreßprofil besteht.

Eine weitere bevorzugte Ausführung der Erfindung sieht vor, daß über dem Längslenker ein Deformationselement fahrzeugrahmenfest angebracht ist.

Ein solches Deformationselement wird zusätzlich zur Achsaufhängung zum Energieabbau durch Verformung verwendet. Erstreckt sich dieses über der Gabelbrücke vom Fahrzeugrahmen ausgehend nach vome, so wird die Kippsicherheit des Fahrzeugs bei einem Frontalaufprall erhöht.

Bevorzugte Ausführungsbeispiele der Erfindung beschreibt die nachfolgende Beschreibung mit der zugehörigen Zeichnung. Es zeigen:
- Figur 1: den vorderen Bereich eines Zweirads entsprechend der Erfindung,
- Figur 2: eine Gabelbrücke in bevorzugter Ausführung für ein Zweirad entsprechend der Erfindung,
- Figur 3: die Gabelbrücke aus Figur 2 in verformtem Zustand,
- Figur 4: eine Frontansicht einer Vorderradgabel entsprechend der Erfindung,
- Figur 5: einen Schnitt durch einen Gabelholm der Vorderradgabel aus Figur 4,
- Figur 6: eine Frontansicht einer weiteren Vorderradgabel entsprechend der Erfindung und
- Figur 7: einen Schnitt durch einen verformten Gabelholm entsprechend der weiteren Vorderradgabel aus Figur 6.

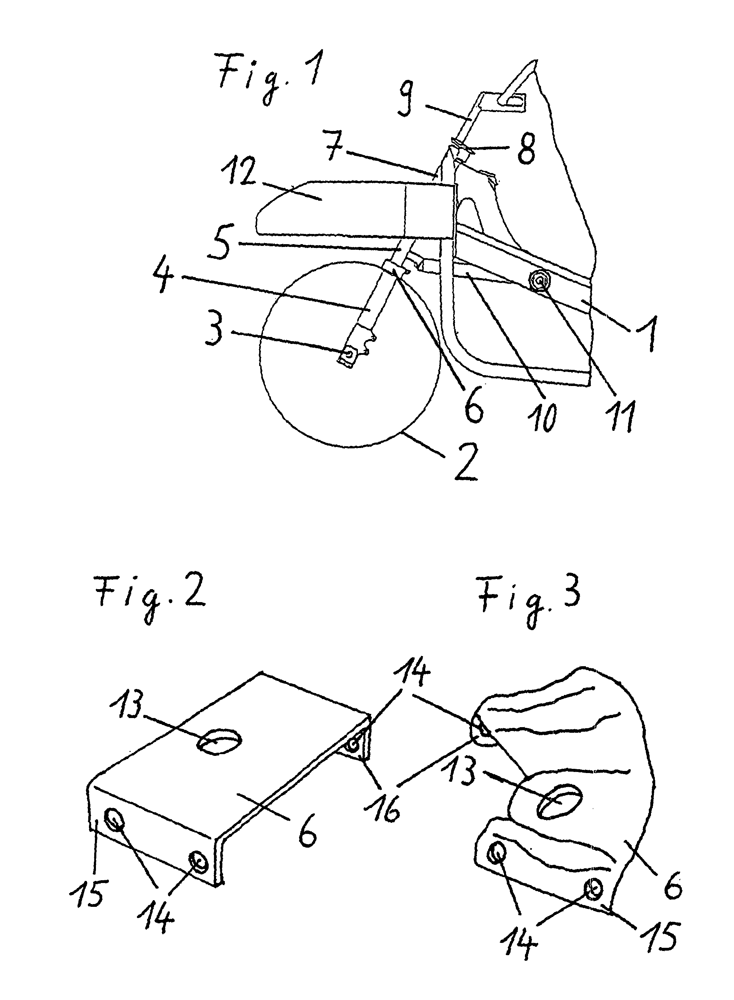

Nach Figur 1 besitzt ein Zweirad mit einem Fahrzeugrahmen 1 eine federnde, lenkbare Achsaufhängung für ein Vorderrad 2, bei der eine Radachse 3 von einer Achsaufnahme 4 geführt wird. Die Achsaufnahme 4 ist der untere Teil eines Gleitrohrs, dessen oberer Teil durch ein Rohr 5 gebildet wird, wobei Achsaufnahme 4 und Rohr 5 fest miteinander verbunden sind.

Beide Gleitrohre, links und rechts des Vorderrades 2, sind über dem Vorderrad 2 durch eine Gabelbrücke 6 miteinander verbunden und bilden mit dem Vorderrad 2 zusammen den ungefederten Teil der vorderen Achsaufhängung.

In jedem Gleitrohr ist, teleskopisch verschiebbar, jeweils ein Standrohr 7 gleitend geführt und beide Standrohre 7 bilden, verbunden durch eine obere Gabelbrücke 8, die Verbindung zum Fahrzeugrahmen 1 und eine Lenkeinrichtung 9.

Der ungefederte Teil der Achsaufhängung wird über einen Längslenker 10 am Fahrzeugrahmen 1 abgestützt. Dazu ist zwischen dem Längslenker 10 und dem Fahrzeugrahmen 1 ein nicht gezeichnetes Federsystem angebracht; das zusätzlich um einen nicht gezeichneten Dämpfer ergänzt sein kann. Der Längslenker 10 ist am Fahrzeugrahmen 1, um eine Fahrzeugquerachse 11 schwenkbar, mit seinem einen Ende angebunden, wobei sein anderes Ende über ein nicht sichtbares Gelenk, zum Beispiel ein Kugelgelenk, an der Gabelbrücke 6 angebracht ist. Über die nicht gezeichnete Feder und den Längslenker 10 wird der ungefederte Teil der Achsaufhängung am Fahrzeugrahmen 1 abgestützt. Das bewirkt, daß der Fahrzeugrahmen 1 und die Lenkeinrichtung 9 über die Standrohre 7 teleskopisch ein- . federbar in den Gleitrohren geführt sind.

Über dem Vorderrad 2 befindet sich, am Fahrzeugrahmen 1 angebracht, ein Deformationselement 12 zum Abbau kinetischer Energie durch Verformung im Falle eines Frontalaufpralls.

Allerdings nimmt zwangsläufig nicht nur das Deformationselement 12 kinetische Energie auf, sondern es wird ein Großteil dieser kinetischen Energie durch die Verformung der Vorderradgabel, bestehend aus Gleitrohren, Standrohren 7 und Gabelbrücken 6,8, abgebaut. Dazu ist es günstig, wenn die Vorderradgabel und die sie führenden Elemente, wie zum Beispiel der Längslenker 10, beanspruchungsgemäß zum Abbau von kinetischer Energie durch Verformung ausgebildet sind.

Ein solches Beispiel einer beanspruchungsgemäßen Ausbildung eines Bauteils der lenkbaren Achsaufhängung zeigen Figur 2 und Figur 3. Die Gabelbrücke 6 aus Profilstahl ist U-förmig ausgebildet und besitzt eine Bohrung 13 zur Aufnahme des nicht gezeichneten Kugelgelenks zur Abstützung durch den Längslenker 10. Über Bohrungen 14 wird jeweils ein Schenkel 15, 16 der U-förmigen Gabelbrücke 6 an jeweils einem Gleitrohr angebracht.

Figur 3 zeigt die Gabelbrücke 6 in verformtem Zustand, nach einem Frontalaufprall. Durch die Verformung des Stahlprofils wird eine große Energiemenge in der Gabelbrücke 6 abgebaut. Gleichzeitig, mit der Gabelbrücke 6, wird der in dieser Abbildung nicht gezeichnete Längslenker 10 verformt, der dadurch ebenfalls kinetische Energie abbaut. Da das Deformationselement 12 (Figur 1) über dem Schwerpunkt des Zweirads angebracht ist, verhindert dieses das Kippen des Zweirads durch Abstützung des Fahrzeugrahmens 1 beim Aufprall, ebenfalls unter Abbau von kinetischer Energie durch Verformung.

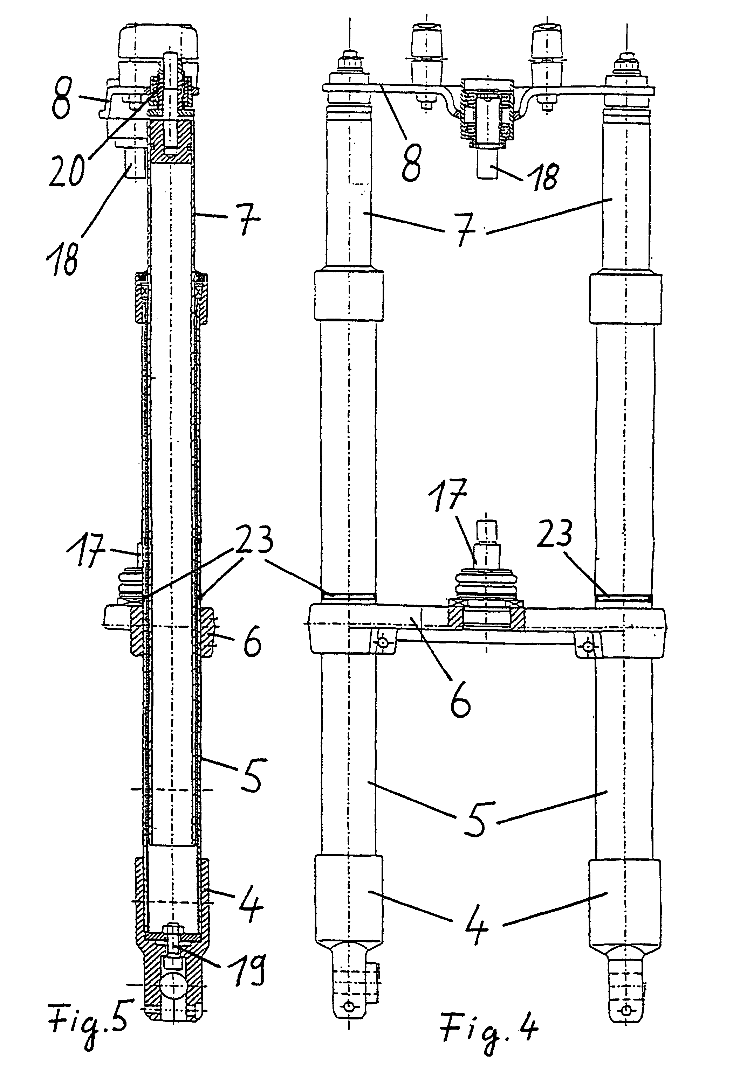

In Figur 4 ist eine Vorderradgabel mit ihren Einzelheiten näher dargestellt. Beide Gleitrohre links und rechts des in dieser Figur nicht gezeichneten Vorderrades 2 bestehen aus jeweils einer Achsaufnahme 4 aus Leichtmetallguß, in die jeweils ein Rohr 5 eingepreßt ist. Für eine sichere Verbindung von Achsaufnahme 4 und Rohr 5 können diese noch an der Stelle, an der sie überlappend ineinanderragen, miteinander verklebt werden. Im Abstand von den Achsaufnahmen 4, über dem nicht gezeichneten Vorderrad 2, verbindet die beiden Rohre 5 eine an diesen festgeklemmte Gabelbrücke 6. Die Gabelbrücke 6 besitzt einen Stehbolzen 17, an dem das nicht gezeichnete Gelenk der Verbindung zum in dieser Figur nicht gezeichneten Längslenker 10 angebracht ist. Die Rohre 5 des Gleitrohrs sind Stahlrohre, die über die Standrohre 7 teleskopisch verschiebbar geführt werden, wobei die Standrohre 7 durch die obere Gabelbrücke 8 verbunden und über einen Drehzapfen 18 drehbar, an dem in dieser Abbildung nicht gezeichneten Fahrzeugrahmen 1 befestigt sind.

Figur 5 zeigt in einem Schnitt durch einen Gabelholm entsprechend Figur 4 das gebaute Gleitrohr aus Achsaufnahme 4 und Rohr 5. Das Rohr 5 ist in die Achsaufnahme 4 hineingesteckt und mit dieser durch eine Schraube 19 verschraubt. Im Rohr 5 ist teleskopisch verschiebbar das Standrohr 7 geführt, das sich in Richtung der Achsaufnahme 4 bis über den Stehbolzen 17 hinauserstreckt, damit bei einer Verformung sowohl Gleitrohr, als auch Standrohr 7 kinetische Energie durch Verformung abbauen. Die Standrohre 7 sind in der oberen Gabelbrücke 8 über Kugelgelenke 20 gelagert, damit die von dem in dieser Figur nicht gezeichneten Längslenker 10 aufgezwungene Schwenkbewegung bei dessen Bewegung um die Fahrzeugquerachse 11 ausgeführt werden kann.

Die Wandstärke des Rohrs 5, außerhalb der Achsaufnahme 4, ist über seinen Umfang durch eine Nut 23 geschwächt, und zwar in der Nähe der Verbindung von Längslenker 10 und Gleitrohr, wenig oberhalb der Gabelbrücke 6. Diese Nut 23 bildet eine Sollknickstelle in der Nähe der Stelle mit dem größten Biegemoment bei einem Frontalaufprall. Liegt die Nut 23 oberhalb der Gabelbrücke 6, so wird, im Falle eines Abscherens der Vorderradgabel durch den Aufprall, das Vorderrad 2 mit den daran verbleibenden Vorderradgabelteilen vom Längslenker 10 am Fahrzeugrahmen 1 gehalten und verhindert, daß die abgescherten Fahrzeugteile weggeschleudert werden.

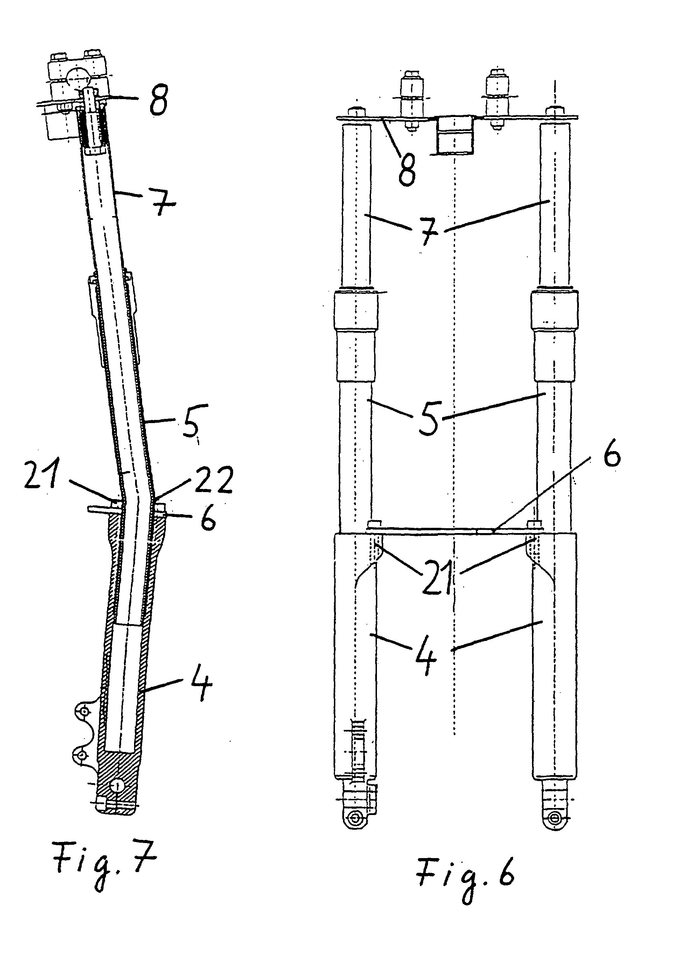

Figur 6 zeigt die Frontansicht einer weiteren Vorderradgabel. Bei dieser ist eine Gabelbrücke 6 aus Stahlblech von oben auf die Achsaufnahmen 4 der Gleitrohre aufgelegt und mit Schrauben 21 an diesen befestigt. Die Rohre 5 aus Stahl sind mit den Achsaufnahmen 4 über eine Preßpassung, die zusätzlich noch geklebt ist, eingesteckt verbunden und verlängern diese nach oben. In jedem so gebauten Gleitrohr wird ein Standrohr 7 teleskopisch einfederbar geführt, wobei die Standrohre 7 durch eine obere Gabelbrücke 8 verbunden sind.

Figur 7 zeigt einen Schnitt durch einen verformten Gabelholm entsprechend der Vorderradgabel aus Figur 6. Aus diesem Schnitt ist ersichtlich, daß das Standrohr 7 in Richtung Achsaufnahme 4 in diese hineinragt und zwar bis über die Gabelbrücke 6 hinaus. So ist das Rohr 5, an einer Knickstelle 22, der Stelle des maximalen Biegemoments bei Verformung, verstärkt durch das Standrohr 7. Das heißt, daß beide Rohre, Rohr 5 und Standrohr 7, verformt werden und dadurch kinetische Energie abbauen.

## Patentansprüche

1. Federnde, lenkbare Achsaufhängung für ein Zweirad, aus mindestens einem Gleitrohr und mit mindestens einem, um eine Fahrzeugquerachse (11) schwenkbar angebrachten, Längslenker (10), der mindestens über ein Gelenk mit dem Gleitrohr verbunden ist, **dadurch gekennzeichnet,**
**dass** das Gleitrohr aus zwei ursprünglich separaten Teilen gebaut ist, nämlich aus einer Achsaufnahme (4), zur Aufnahme einer Radachse (3), und aus einem Rohr (5), wobei das Rohr (5) fest mit der Achsaufnahme (4) verbunden ist und diese verlängert und
**dass** die Wandstärke des Rohrs (5) außerhalb der Achsaufnahme (4) über mindestens einen Teil seines Umfangs geschwächt ist.

2. Achsaufhängung nach Anspruch 1, **dadurch gekennzeichnet, daß** das Rohr (5) in die Achsaufnahme (4), insbesondere unter Bildung einer Preßpassung, hineinragt, und daß der auf die Längsachse des Gleitrohrs projezierte Abstand zwischen dem Gelenk und der Radachse (3) größer ist, als der Abstand zwischen dem achsaufnahmeseitigen Ende des Rohrs (5) und der Radachse (3).

3. Achsaufhängung nach Anspruch 1 oder 2, **dadurch gekennzeichnet, dass** die Wandstärke des Rohrs (5) außerhalb der Achsaufnahme (4) durch eine Kerbe oder eine Nut (23) geschwächt ist.

4. Achsaufhängung nach Anspruch 3, **dadurch gekennzeichnet, daß** die Wandstärke des Rohrs (5) in der Nähe der Verbindung von Längslenker (10) und Gleitrohr geschwächt ist.

5. Achsaufhängung nach einem der Ansprüche 1 bis 4, **dadurch gekennzeichnet, daß** zwei gebaute Gleitrohre die Radachse (3) aufnehmen und über mindestens eine Gabelbrücke (6) verbunden sind, an der der Längslenker (10) angebracht ist.

6. Achsaufhängung nach Anspruch 5, **dadurch gekennzeichnet, daß** die Gabelbrücke (6) die Achsaufnahmen (4) verbindet.

7. Achsaufhängung nach Anspruch 6, **dadurch gekennzeichnet, daß** die Gabelbrücke (6) von oben auf die Achsaufnahmen (4) aufgelegt und an diesen befestigt ist.

8. Achsaufhängung nach Anspruch 5, **dadurch gekennzeichnet, daß** die Gabelbrücke (6) die Rohre (5) der gebauten Gleitrohre verbindet.

9. Achsaufhängung nach einem der Ansprüche 5 bis 8, **dadurch gekennzeichnet, daß** die Gabelbrücke (6) aus Stahlblech oder aus gewalztem oder stranggepreßtem Profilstahl besteht.

10. Achsaufhängung nach einem der Ansprüche 5 bis 9, **dadurch gekennzeichnet, daß** die Gabelbrücke (6) U-förmig ausgebildet ist, wobei jeweils ein Schenkel (15,16) des U's an jeweils einem Gleitrohr befestigt ist.

11. Achsaufhängung nach einem der Ansprüche 1 bis 10, **dadurch gekennzeichnet, daß** das Gleitrohr auf einem Standrohr (7) teleskopisch verschiebbar geführt wird, das sich in Richtung der Achsaufnahme (4) mindestens bis über die Verbindung des Längslenkers (10) mit dem Gleitrohr hinaus erstreckt.

12. Achsaufhängung nach einem der Ansprüche 1 bis 11, **dadurch gekennzeichnet, daß** die Achsaufnahme (4) aus Metallguß, insbesondere Leichtmetallguß, besteht.

13. Achsaufhängung nach einem der Ansprüche 1 bis 12, **dadurch gekennzeichnet, daß** das Rohr (5) des Gleitrohrs aus Stahl oder aus einem Leichtmetall-Strangpreßprofil besteht.

## Claims

1. A sprung steerable axle suspension system for a two-wheel vehicle, comprising at least one sliding tube and at least longitudinal control arm (10) pivotably mounted around a transverse axis (11) of the vehicle and connected to the sliding tube by at least one joint, **characterised in that** the sliding tube is made up of two originally separate parts, i.e. a tube (5) and a holder (4) for receiving a wheel axle (3), the tube (5) being firmly connected to and in line with the axle holder (4), and the wall thickness of the tube (5) outside the axle holder (4) is reduced over at least a part of its periphery.

2. An axial suspension system according to claim 1, **characterised in that** the tube (5) projects into the axle holder (4), especially in a force fit, and the distance, projected on to the longitudinal axis of the sliding tube, between the joint and the wheel axis (3) is greater than the distance between the axle-holder end of the tube (5) and the wheel axle (3).

3. An axle suspension system according to claim 1 or claim 2, **characterised in that** the wall thickness of the tube (5) outside the axle holder (4) is reduced by a notch or a groove (23).

4. An axle suspension system according to claim 3, **characterised in that** the wall thickness of the tube (5) is reduced near the connection between the control arm (10) and the sliding tube.

5. An axle suspension system according to any of claims 1 to 4, **characterised in that** two composite sliding tubes receive the wheel axle (3) and are connected by at least one fork bridge (6) on which the longitudinal control arm (10) is mounted.

6. An axle suspension system according to claim 5, **characterised in that** the fork bridge (6) connects the axle holders (4).

7. An axle suspension system according to claim 6, **characterised in that** the fork bridge (6) is placed from above on the axle holders (4) and fastened thereto.

8. An axle suspension system according to claim 5, **characterised in that** the fork bridge (6) connects the composite sliding tubes (5).

9. An axle suspension system according to any of claims 5 to 8, **characterised in that** the fork bridge (6) is made of sheet steel or of rolled or extruded profile steel.

10. An axle suspension system according to any of claims 5 to 9, **characterised in that** the fork bridge (6) is U-shaped, each limb (15,16) of the U being fastened to a respective sliding tube,

11. An axle suspension system according to any of claims 1 to 10, **characterised in that** the sliding tube is telescopically guided on a vertical tube (7) which extends in the direction of the axle holder (4) at least over the connection between the longitudinal control arm (10) and the sliding tube.

12. An axle suspension system according to any of claims 1 to 11, **characterised in that** the axle holder (4) is made of cast metal, especially cast light metal.

13. An axle suspension system according to any of claims 1 to 12, **characterised in that** the sliding tube (5) is made of steel or from an extruded light-metal profile.

## Revendications

1. Suspension d'axe élastique, orientable pour un deux roues, composée d'au moins un tube coulissant et d'au moins une bielle longitudinale (10) montée pour pouvoir pivoter autour d'un axe transversal (11) du véhicule, et qui est reliée au tube coulissant au moins par une articulation,
**caractérisée en ce que**
le tube coulissant est composé de deux éléments initialement séparés, à savoir d'un support d'axe (4), destiné à recevoir un axe de roue (3), et d'un tube (5), le tube (5) étant relié rigidement au support d'axe (4) et prolongeant ce dernier, et
l'épaisseur de paroi du tube (5) est affaiblie en dehors du support d'axe (4) sur au moins une partie de sa périphérie.

2. Suspension d'axe selon la revendication 1,
**caractérisée en ce que**
le tube (5) est engagé dans le support d'axe (4), en particulier avec formation d'un ajustement à force, et la distance entre l'articulation et l'axe (3) de la roue, vue en projection sur l'axe longitudinal du tube coulissant. est plus grande que la distance entre l'extrémité du tube (5), côté support d'axe, et l'axe (3) de la roue.

3. Suspension d'axe selon la revendication 1 ou 2,
**caractérisée en ce que**
l'épaisseur de paroi du tube (5) est affaiblie en dehors du support d'axe (4) par une encoche ou une gorge (23).

4. Suspension d'axe selon la revendication 3,
**caractérisée en ce que**
l'épaisseur de paroi du tube (5) est affaiblie dans le voisinage de la liaison entre la bielle longitudinale (10) et le tube coulissant.

5. Suspension d'axe selon une des revendications 1 à 4,
**caractérisée en ce que**
deux tubes coulissants composés reçoivent l'axe de roue (3) et sont reliés par l'intermédiaire d'au moins une traverse de fourche (6) à laquelle la bielle longitudinale (10) est reliée.

6. Suspension de roue selon la revendication 5,
**caractérisée en ce que**
la traverse de fourche (6) relie les supports d'axe (4).

7. Suspension d'axe selon la revendication 6,
**caractérisée en ce que**
la traverse de fourche (6) est emboîtée de haut en bas sur les supports d'axe (4) et fixée à ces derniers.

8. Suspension d'axe selon la revendication 5,
**caractérisée en ce que**
la traverse de fourche (6) relie les tubes (5) des tubes coulissants composés.

9. Suspension d'axe selon une des revendications 5 à 8,
**caractérisée en ce que**
la traverse de fourche (6) est faite de tôle d'acier ou d'un profilé d'acier laminé ou filé à la presse.

10. Suspension d'axe selon une des revendications 5 à 9,
**caractérisée en ce que**
la traverse de fourche (6) est en forme de U, une branche (15, 16) du U étant fixée à un tube coulissant respectif.

11. Suspension d'axe selon une des revendications 1 à10
**caractérisée en ce que**
le tube coulissant est guidé pour coulisser télescopiquement sur un tube fixe (7) qui se prolonge en direction du support d'axe (4), au moins jusqu'au-delà de la liaison entre la bielle longitudinale (10) et le tube coulissant.

12. Suspension d'axe selon une des revendications 1 à 11,
**caractérisée en ce que**
le support d'axe (4) est fait d'une pièce coulée métallique, en particulier d'un pièce coulée en métal léger.

13. Suspension d'axe selon une des revendications 1 à 12,
**caractérisée en ce que**
le tube (5) du tube coulissant est fait d'acier ou d'un profilé en métal léger filé à la presse.
